(19) Europäisches Patentamt

European Patent Office

Office européen des brevets

(11) EP 0 791 870 A1

## (12) EUROPÄISCHE PATENTANMELDUNG

(43) Veröffentlichungstag:
27.08.1997 Patentblatt 1997/35

(51) Int. Cl.⁶: **G05B 13/02**

(21) Anmeldenummer: 97102599.4

(22) Anmeldetag: 18.02.1997

(84) Benannte Vertragsstaaten:
**DE FR GB IT**

(30) Priorität: 21.02.1996 DE 19606480

(71) Anmelder: **SIEMENS AKTIENGESELLSCHAFT**
**80333 München (DE)**

(72) Erfinder:
- **Berstecher, Ralph**
  **73230 Kirchheim (DE)**
- **Palm, Rainer, Dr.**
  **80331 München (DE)**

(54) **Verfahren und Anordnung zur Adaption eines Fuzzy-Reglers**

(57)    Mit der Erfindung werden Regelkenngrößen eines in einem geschlossenen Regelkreis eingebauten Fuzzy-Reglers (CON) durch linguistische Variablen charakterisiert und mit Hilfe von liguistischen Regeln in einem zweiten Fuzzy-Regler (Ad) ausgewertet. Die Regeln sind so gestaltet, daß eine möglichst schnelle Annäherung eines augenblicklichen Systemzustandes an die Schaltgerade bzw. Schaltfläche des Reglers stattfindet. Zur Adaption werden dabei in der Kennlinie des Reglers Stützstellen definiert und diese vorzugsweise durch Variation der Ausgangs-Fuzzy-Sets im Sinne eines gewünschten Reglerverhaltens verschoben. Dabei ist für jede einzelne Stützstelle ein separater Fuzzy-Regelsatz aufzustellen. Die Erfindung kann auf dem gesamten Gebiet der Fuzzy-Kontrol eingesetzt werden.

FIG 1

EP 0 791 870 A1

## Beschreibung

Bei komplexen regelungstechnischen Problemen versucht man Regler einzusetzen, welche Regelungsstrategieen eines menschlichen Experten nachbilden. Fuzzy-Regler haben sich für solche Anwendungsfälle als besonders geeignet erwiesen, da sie sich in Form von Wenn-Dann-Regeln einfach programmieren lassen. Da diese Art der Problemformulierung dem menschlichen Experten sehr entgegenkommt, lassen sich auch komplexe Regelzusammenhänge durch Fuzzy-Regler gut in den Griff bekommen. Da sich Fuzzy-Regler im großindustriellen Maßstab zusätzlich auch noch kostengünstig umsetzen lassen, und für ihre Programmierung keine aufwendigen mathematischen Analysen erfordern, haben sie in viele technische Bereiche der Industrie Eingang gefunden. Vor allem im Bereich der Konsumentenprodukte lassen sich durch Einsatz von Fuzzy-Technologie häufig wirksamere oder energiesparende Geräte bauen.

Die Parameter des zu regelnden Systems oder Prozesses und damit eines solchen Fuzzy-Regelsystems können sich jedoch durch Alterung oder durch äußere Einflüsse in Abhängigkeit von der Zeit ändern. Dennoch sollte die Güte des Systems erhalten bleiben. Als Lösung für dieses Problem bietet sich die Adaption des Reglers mit Hilfe eines Adaptionsblockes an. Verschiedene Adaptionsvarianten deren Vor- und Nachteile und Beispiele für solche Adaptionsvarianten sind von der Gesellschaft für Meß- und Automatisierungstechnik (GMA) untersucht worden. Sie sind in dem Artikel "Adaptive Regler, Erläuterungen und Beispiele", VDE/VDE Richtlinie 3685 aus dem Jahr 1992 zusammengefaßt.

Eine besondere Form des Fuzzy-Reglers stellt der Fuzzy Sliding Mode-Regler dar, und ist durch seine besonderen Stabilitätseigenschaften ausgezeichnet. In der internationalen Veröffentlichung WO 93/11 473 sind die Grundlagen und der Aufbau eines solchen Fuzzy-Reglers beschrieben. Diese werden im weiteren Teil der Anmeldung als bekannt vorausgesetzt. Solche Fuzzy Sliding Mode-Regler sind Fuzzy-Regler in Diagonalform und sind äquivalent zu Sliding Mode-Reglern mit einer Grenzschicht. Der Fuzzy Sliding Mode-Regler kann dabei als nichtlineare Kennlinie interpretiert werden. Die Abstimmung der Vielzahl möglicher Parameter eines solchen Fuzzy-Reglers für einen optimalen Betrieb ist aufwendig und zeitintensiv. Die Adaption eines solchen Fuzzy Sliding Mode-Reglers mit Grenzschicht an einen anderen Betriebspunkt oder veränderte Systemparameter stellt deshalb ein besonders komplexes Problem dar. Auf die Regelparameter von Fuzzy Sliding Mode-Reglern wird auch von R. Palm in seinem Artikel "Robust Control by Fuzzy Sliding Mode" in Automatica, Seiten 1429 bis 1437, 1994 eingegangen. Weiterer Stand der Technik zur Adaption von Fuzzy-Reglern ist nicht bekannt.

Der Erfindung liegt die Aufgabe zugrunde, eine Anordnung und ein Verfahren anzugeben, mit dem ein Fuzzy Sliding Mode Regler schnell und optimal an einen neuen Betriebszustand und andere Systemparameter angepaßt werden kann.

Diese Aufgabe wird für das Verfahren gemäß den Merkmalen des Patentanspruches 1 und für die Anordnung gemäß den Merkmalen des Patentanspruches 9 gelöst. Weiterbildungen der Erfindung ergeben sich aus den abhängigen Ansprüchen.

Ein besonderer Vorteil des erfindungsgemäßen Verfahrens besteht darin, daß erstmals ein Fuzzy-Regler zur Adaption eines Fuzzy-Reglers eingesetzt wird. Durch die Interpretation der Regelparameter dieses Reglers als linguistische Variable und die Auswertung dieser linguistischen Variablen durch linguistische Regeln, erhält man einen einfachen Zugang zum Adaptionsproblem des Reglers. Durch diese erfindungsgemäße Vorgehensweise kann Expertenwissen optimal genutzt werden.

Besonders vorteilhaft werden linguistische Variablen von der Entfernung des augenblicklichen Zustandspunktes des Regelkreises von der Schaltgeraden, bzw. dem Normalenabstand zur Schaltfläche des Fuzzy-Reglers, und der Annäherungsgeschwindigkeit dieses augenblicklichen Zustandspunktes an die Schaltgerade bzw. Schaltfläche, sowie der Betrag der Stellgröße verwendet. Diese Größen stellen alleine oder in wahlweiser Verbindung miteinander die wesentlichen charakteristischen Kenngrößen des Fuzzy-Reglers dar und ermöglichen somit eine effiziente Adaption, was bedeutet, daß der Adaptionsregler mit einem kleinen Fuzzy-Regelsatz ausgestattet werden kann.

Vorteilhaft wird als Gütemaß eine möglichst schnelle Annäherungsgeschwindigkeit an die Schaltgerade, bzw. Schaltfläche vom augenblicklichen Zustandspunkt des Fuzzy-Reglers bei angemessener Stellgröße gewählt. Damit wird eine schnelle Anpassung an andere Betriebspunkte und andere Systemparameter ermöglicht.

Vorteilhaft kann als Gütemaß auch eine durch eine bestimmte Stellgrößenänderung ausgelöste Annäherungsgeschwindigkeit des Zustandspunktes an die Schaltgerade bzw. Schaltfläche gewählt werden. Damit kann man erreichen, daß bezogen auf eine mögliche Stellgrößenänderung eine Zustandsänderung des Reglers mit möglichst geringem Aufwand erreicht werden kann. Auch läßt sich damit beurteilen, ob mit einer entsprechenden Stellgrößenänderung überhaupt noch eine wesentliche Änderung des Betrages der Annäherungsgeschwindigkeit erreichbar ist.

Besonders vorteilhaft werden solche Reglerparameteränderungen bevorzugt, welche bei kleiner Betragsänderung der Stellgröße eine hohe Annäherungsgeschwidigkeit bewirken, da dadurch der Regler besonders schnell adaptiert werden kann.

Besonders vorteilhaft werden solche Reglerparameter durch die Fuzzy-Regeln bei der Adaption eingestellt, welche eine Änderung des Systemzustandes des zu adaptierenden Reglers in Abhängigkeit des augenblicklichen Abstandes des Zustandspunktes von der Schaltgeraden bzw. Schaltfläche des Reglers bewirken. Damit kann geregelt werden, wie schnell sich der Regler auf einen neuen Zustand einstellt, bzw. wie stabil er um die Schaltgerade herum arbeitet. Bei Fuzzy Sliding Mode-Reglern kann beispielsweise als Bewertungsmaß für den Betrag der Annäherungsgeschwindigkeit die Schichtdicke der Grenzschicht dienen.

Besonders vorteilhaft lassen sich für die Adaption Fuzzy Sliding Mode-Regler mit Grenzschicht (boundary layer) adaptieren, da diese einen Kennlinienverlauf aufweisen, der durch Stützstellen beschrieben werden kann. Diese Stützstellen lassen sich dann vorteilhafterweise durch Anwendung von Fuzzy-Regeln auf die Regelparameter des Reglers verschieben. Damit kann innerhalb der Grenzschicht ein genau vorgegebener Übergang zwischen positiver Stellgröße und negativer Stellgröße erreicht werden. Die Zahl der gewählten Stützstellen hängt dabei vorzugsweise vom verfügbaren Expertenwissen bezüglich der Adaption und der gewünschten Übergangsgenauigkeit innerhalb der Grenzschicht ab.

Besonders vorteilhaft läßt sich die Form der Kennlinie durch die Variation der Position der Stützstellen, welche die Kennlinie durchlaufen muß, verändern. Hierzu werden vorteilhafterweise die Ausgangs-Fuzzy-Sets in Form einer Ziehharmonikafunktion gewählt und die Positionsvariation der Stützstellen wird durchgeführt, indem die Ziehharmonika gedehnt oder gestaucht wird. Vorteilhaft läßt sich die Variation der Position der Stützstellen auch durch eine Variation der Ziehharmonikafunktion der Eingangsfuzzy-Sets des Reglers durchführen, dabei ist jedoch zu beachten, daß ein nichtlinearer Zusammenhang zwischen Eingangs- und Ausgangs-Fuzzy-Sets auftritt und damit der auftretende Betrag der Stellgrößenänderung in Abhängigkeit der durchgeführten Parameteränderung nicht genau vorherbestimmt werden kann, während dies bei der Variation der Kennlinie über die Ausgangs-Fuzzy-Sets möglich ist.

Besonders vorteilhaft werden deshalb zur Variation der Kennlinie des zu adaptierenden Reglers die Ausgangsfuzzy-Sets variiert, damit zwischen den durchgeführten Reglerparameteränderungen und der Stellgröße ein proportionaler Zusammenhang besteht. Auf diese Weise kann die Adaptionsgeschwindigkeit, d. h. die Annäherungsgeschwindigkeit des augenblicklichen Zustandspunktes an die Schaltgerade besonders efektiv eingestellt werden.

Besonders vorteilhaft ist eine Anordnung, welche zur Adaption eines Fuzzy-Reglers ebenfalls einen Fuzzy-Regler aufweist, da Fuzzy-Regler kostengünstig sind und eine komplexe Parameteränderung des zu adaptierenden Reglers einfacher durch linguistische Regeln beschrieben werden kann, als dies durch exakte mathematische Methoden möglich ist.

Im folgenden wird die Erfindung anhand von Figuren weiter erläutert.

Figur 1     gibt als Beispiel einen zu adaptierenden Regelkreis an.
Figur 2     gibt ein Beispiel einer Kennlinie eines Fuzzy-Reglers mit Stützstellen an.
Figur 3     veranschaulicht Reglerkenngrößen des zu adaptierenden Reglers.
Figur 4     gibt ein Beispiel von Fuzzy-Regeln an.
Figur 5     veranschaulicht ein Beispiel der Position von Stützstellen.
Figur 6     gibt die Abhängigkeit der Positionsänderung einer Stützstelle von einer Parameteränderung an.
Figur 7     gibt ein dreidimensionales Schaubild zur Veranschaulichung der komplexen Zusammenhänge bei der Adaption eines Fuzzy-Reglers an.

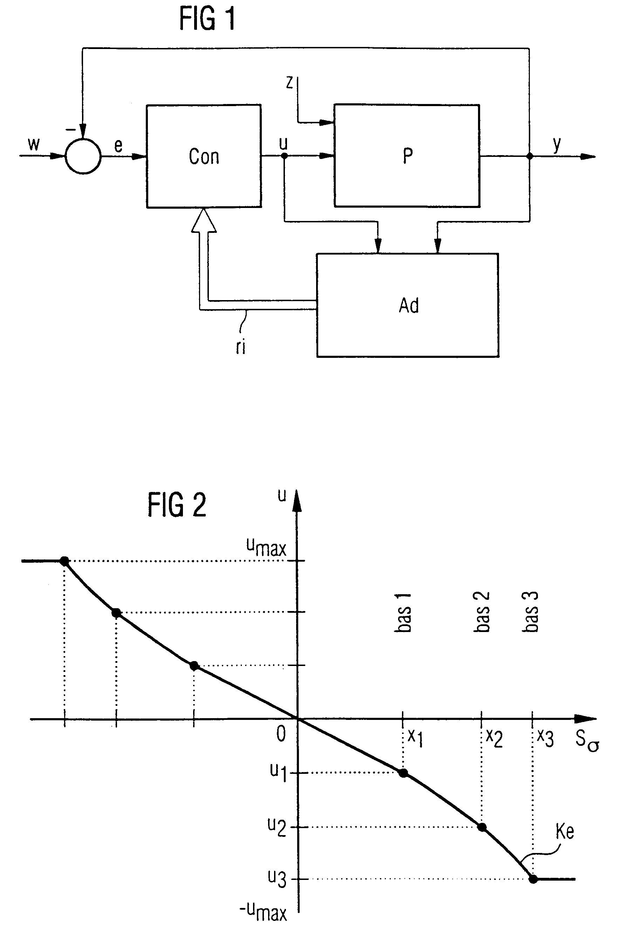

Figur 1 gibt als Beispiel ein Blockschaltbild eines zu adaptierenden Regelkreises mit einem Fuzzy-Regler oder Fuzzy-Controller an. In diesem Regelkreis ist ein Fuzzy-Controller Con vor einer Regelstrecke P angeordnet. Die Führungsgröße ist mit w bezeichnet, die Regeldifferenz mit e die Stellgröße mit u und die Regelgröße mit y. Das zu regelnde Systeme oder der zu regelnde Prozeß ist mit P bezeichnet. Dem Prozeß P wird eine Störgröße z aufgeschaltet. Weiterhin ist ein Adaptionsverfahren oder ein Adaptionsschaltkreis vorgesehen, welcher mit Ad bezeichnet ist. Die Darstellung des Adaptionsschaltkreises Ad oder des Adaptionsverfahrens in einem Block soll jedoch nicht bedeuten, daß das erfindungsgemäße Verfahren oder die erfindungsgemäße Anordnung lediglich in einem Block realisiert werden kann. Es ist auch durchaus vorstellbar, daß mehrere Untereinheiten Verwendung finden. Auch ist denkbar, daß Teile des Verfahrens ausgelagert werden und lediglich andere Teile zur Anwendung kommen. Wie weiter erkannt werden kann, wird dem Adaptionsverfahren bzw. dem Adaptionsschaltkreis die Stellgröße und die Regelgröße zugeführt. Es sind jedoch auch Ausbildungen der Erfindung denkbar, bei denen lediglich eine dieser Größen oder Fallweise eine zusätzliche Größe eine Rolle spielt. Beim erfindungsgemäßen Verfahren und bei der erfindungsgemäßen Anordnung geht es vor allen Dingen darum, daß aus der Stellgröße u und der Regelgröße y linguistische Variable gebildet werden, welche im Adaptionsblock Ad mit Hilfe von linguistischen Regeln verarbeitet werden. Diese Verarbeitung führt zu Regelparametern $r_i$, welche dem Fuzzy-Regler Con zugeführt werden, um diesen zu adaptieren.

Im allgemeinen wird dem Fuzzy-Regler eine Eingangsvariable als physikalische Größe zugeführt, diese wird zunächst über Eingangsfuzzy-Sets fuzzyfiziert. Vorzugsweise sind die Zugehörigkeitsfunktionen der Eingangs- und Ausgangsfunktionen des Reglers stückweise linear. Dabei werden vorzugsweise solche Funktionen verwendet, welche an jeder Stelle des Ein- und Ausgangsbereiches so gestaltet sind, daß höchstens zwei benachbarte Zugehörigkeitsfunktion Zugehörigkeitswerte $\mu_i$ ungleich 0 aufweisen. Die Summe der Werte der Zugehörigkeitsfunktionen ist an jeder Stelle 1. Solche Zugehörigkeitsfunktionen werden auch als Ziehharmonikafunktion bezeichnet. Durch den Fuzzy-Regler wird einer physikalischen Größe ein Wertepaar bestehend aus einem linguistischen Wert der linguistischen Variablen und zugehörigem Erfüllungsgrad zugewiesen. Die so erhaltenen verschiedenen Eingangswerte der Eingangsvariablen werden über Regeln in einer Regelbasis verknüpft. Die Menge der Ausgangswerte nach Abarbeitung der Regeln wird ermittelt, indem die Zugehörigkeitsfunktion des Ausgangsfuzzy-Sets mit den Regelergebnissen skaliert werden. Der scharfe Ausgangswert wird vorzugsweise bestimmt, indem die Schwerpunktsmethode angewendet wird. Solche Stellen der Fuzzy-Sets, an den die Prämisse der Fuzzy-Regeln zu 1 erfüllt ist, werden Stützstellen genannt. An solchen Stellen feuert vorzugsweise nur eine Regel. Dies führt dazu, daß die nichtlineare Kennlinie des Fuzzy-Reglers durch diese Punkte verläuft. Dabei bewirkt die Interpolationseigenschaft des Fuzzy-Reglers eventuell eine nichtlineare Interpolation zwischen diesen Stützstellen. Vorzugsweise hängt die Form der Interpolation dabei von der Aggregationseigenschaft und der Defuzzyfizierungsmethode ab.

Fuzzy-Regler können dabei als statische Nichtlinearität interpretiert werden. Der Verlauf der Kennlinie hängt dabei neben den Werten der Regelbasis von den gewählten Zugehörigkeitsfunktionen der Eingangs- und Ausgangsvariablen, sowie der Defuzzyfizierungsmethode ab. Über das heuristische Wissen, oder das Expertenwissen, das in den Fuzzy-Regeln abgelegt ist und die Abhängigkeit der Stellgröße von der Eingangsgröße und den festzulegenden Parametern $r_i$, des Parametervektors für den Fuzzy-Reglers, wird eine Kennlinie bzw. eine Kennfläche des Fuzzy-Reglers definiert.

Ergänzen sich dabei die Zugehörigkeitsfunktionen der Eingangsvariablen des Fuzzy-Reglers an jeder Stelle des Definitionsbereiches zu 1, wobei höchstens zwei benachbarte Zugehörigkeitsfunktionen von 0 verschiedene Zugehörigkeitswerte besitzen, so wird der Punkt, an welchem lediglich eine Regel der Regelbasis erfüllt ist, als Stützstelle bezeichnet.

Ein adaptives Regelsystem ist ein solches, bei dem sich beeinflußbare Eigenschaften automatisch im Sinne eines Gütemaßes auf veränderliche oder unbekannte Prozeßeigenschaften einstellen (VDI/VDE). Durch das erfindungsgemäße Verfahren soll beispielsweise die Kennlinie eines Fuzzy-Reglers bzw. die Kennfläche eines Fuzzy-Reglers angepaßt werden. Für einen Fuzzy Sliding Mode-Regler soll dabei vorzugsweise besonders die Kennlinie innerhalb der Grenzschicht angepaßt werden. Die Adaptionsstrategie wird dabei durch linguistisch definierte Regelbasen festgelegt. Diese Regeln legen fest, wie die einzelnen Parameter des Reglers zu verstellen sind, um das gewünschte Verhalten im geschlossenen Regelkreis zu erreichen. Vorzugsweise wird für die Feineinstellung des Reglers das Verhalten des geschlossenen Regelkreises herangezogen.

Im Gegensatz zum Tunen oder zur Feinabstimmung des Reglers stellt die Adaption eine fortwährende Anpassung an sich ändernde Umgebungsbedingungen dar. Neben der Interpolations- und Approximationseigenschaft von Fuzzy-Reglern ist dabei besonders die Möglichkeit von Bedeutung, die statische Kennlinie bzw. das statische Kennlinienfeld des Fuzzy-Reglers lokal gezielt verändern zu können. In Abhängigkeit der Parameter des Fuzzy-Reglers, welche adaptiv verändert werden, spielen dabei lineare oder nichtlineare Zusammenhänge eine Rolle. Ist der Parametervektor r beispielsweise linear mit der Ausgangsgröße u des Reglers verknüpft, so läßt sich der Zusammenhang besonders einfach darstellen. Bei der Durchführung des erfindungsgemäßen Verfahrens zur Adaption wird vorzugsweise vorausgesetzt, daß die Stellgröße des Fuzzy-Reglers groß genug ist, den Systemzustand aus einem beliebigen Anfangszustand auf die Schaltfläche hinzutreiben und ein Verbleiben der Systemtrajektorie in der Grenzschicht um die Schaltfläche bewirten zu können.

Vorzugsweise soll mit dem erfindungsgemäßen Verfahren der Verlauf des Kennlinienfeldes eines Sliding Mode Fuzzy-Controllers innerhalb einer Grenzschicht adaptiert werden. Hierzu werden vorzugsweise durch das erfindungsgemäße Verfahren die Ausgangswerte des Fuzzy-Reglers an den Stützstellen beeinflußt.

In Figur 2 ist eine solche Kennlinie als Beispiel in Verbindung mit sechs Stützstellen dargestellt. Die Kennlinie ist hier mit Ke bezeichnet und symmetrisch zum Ursprung. Die einzelnen Stützstellen befinden sich für $s_\sigma > 0$ an den Orten $(0,0)$, $(x_1, u_1)$, $(x_2, u_2)$, $(x_3, u_3)$. Da die Kennlinie bezüglich des Ursprungs symmetrisch ist, befinden sich ebenfalls Stützstellen an den entsprechenden Koordinatenpunkten für negative x und positive u. Durch eine solche Vorgehensweise können Symmetrieeigenschaften des zu regelnden Systems oder Prozesses vorteilhaft ausgenutzt werden, um die Zahl zu adaptierender Fuzzy-Regler möglichst klein zu halten. Diese Stützstellen der Kennfläche oder der Kennlinie des Fuzzy-Reglers sind die Stellen, an denen der Wert des Fuzzy-Reglers direkt, d. h. ohne Interpolation angegeben werden kann. Die zu adaptierenden Parameter des Fuzzy-Reglers werden vorzugsweise im Parametervektor r zusammengefaßt. Mit $r = (r_1, ..., r_i, ..., r_n)^T$. Um ein lineares Adaptionsproblem in den Adaptionsparametern $r_i$ zu erhalten, wird der Ausgangswert des Fuzzy-Reglers vorzugsweise an den Stützstellen durch die Momente $M_i$ angepaßt. Die Momente der Zugehörigkeitsfunktionen berechnen sich dabei aus der Gleichung (3). Diese lautet

$$u = g_{fc} = g_{fc}(x, r) = \frac{\sum_{i=1}^{N} M_i \mu_i}{\sum_{i=1}^{N} A_i \mu_i} \tag{3}$$

4

Mit $M_i$ wird das Moment bezeichnet, mit $A_i$ die Fläche einer Regel i, deren Erfülltheitsgrad $\mu_i$ angibt. Das heuristische Wissen oder das Expertenwissen ist in N Regeln abgelegt. $g_{fc}$ beschriebt die Kennlinie bzw. die Kennfläche des Fuzzy-Reglers, während $g_{fc}(x, r)$ die Abhängigkeit der Stellgröße u von der Eingangsgröße x und den noch festzulegenden Parametern $r_i$ kennzeichnet. Der Index i kennzeichnet Die i-te-Stützstelle, während der Index fix angibt, daß die so indizierte Variable festgehalten wird. Gemäß Gleichung (5) kann für $x = x_{fix,i}$ die Schaltvariable $s_{\sigma,i}$ an der i-ten-Stützstelle berechnet werden.

$$s_\sigma = s_{\sigma i} = \left(\lambda_R + \frac{d}{dt}\right)^{(n-1)} e = \sum_{i=0}^{n-1} \binom{n-1}{i} \lambda_R{}^i e^{(n-1-i)} \tag{5}$$

Indem die Momente $M_i$ des Reglers beeinflußt werden, gewährleistet die Adaptionsstrategie vorzugsweise ein vorgebbares Verhalten des geschlossenen Regelkreises, welches für verschiedene Orte des Zustandsraumes $x_{fix,i}$ definiert wird. Für jeden Stützstellenwert, welcher adaptiert werden soll, wird vorzugsweise eine Regelbasis für die Adaption erstellt. Jeder Stützstelle i am Ort $x_{fix,i}$ ist genau ein Parameterwert $r_i$ zugeordnet, der die Höhe $u_i$ der Stützstelle charakterisiert. Damit ist der Wert $u_i$ des Fuzzy-Reglers an der Stützstelle festgelegt. Durch das erfindungsgemäße Verfahren zur Adaption wird dieser Wert $u_i$ des Fuzzy-Reglers an der Stützstelle $x_{fix,i}$ in Abhängigkeit vom Verhalten des geschlossenen Regelkreises beeinflußt. Vorzugsweise wird der Adaptionsvorgang von den Größen

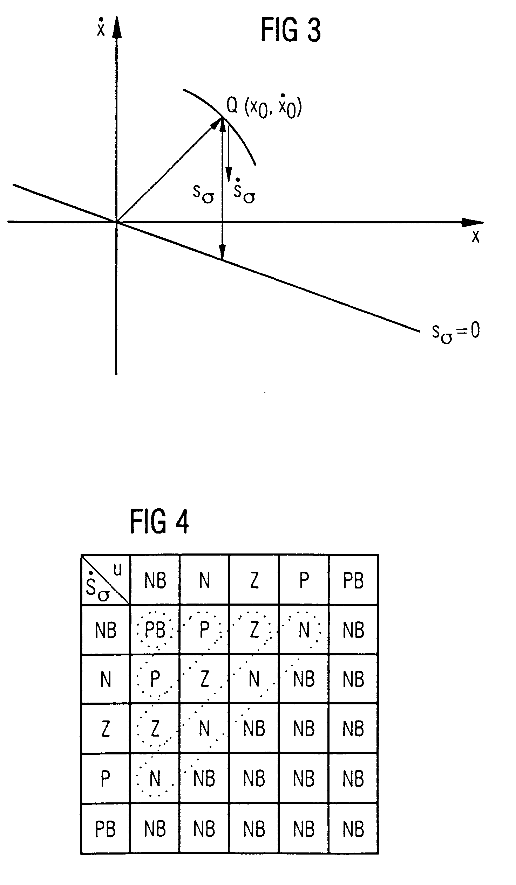

- "Entfernung" $s_\sigma$ von $Q(x_0)$ zu der Schaltgeraden $s_\sigma = 0$ nach Gleichung (5) für $x_{fix,i}$,
- Annäherungsgeschwindigkeit $\dot{s}_\sigma$ von $Q(x_0)$ an die Schaltgerade $s_\sigma = 0$, und
- Stellgröße U

abhängig gemacht. Wie Figur 3 zeigt, sind die entsprechenden Größen Q, $s_\sigma$ und $\dot{s}_\sigma$ in ihren Abhängigkeiten zueinander dargestellt. Die in Figur 3 gezeigte Größe x und $\dot{x}$ ist bei der Beschreibung des Regelkreises auch mit der Regeldifferenz e bezeichnet worden. Diese beiden Größen sind als gleichbedeutend zu betrachten. Aus diesen dargestellten Größen wird vorzugsweise in Verbindung mit der Stellgröße auf eine Parameteränderung $\Delta r_i$ der Komponenten $r_i$ des Parametervektors r geschlossen. Zielsetzung ist bei der erfindungsgemäßen Vorgehensweise eine optimale Annäherung an die Schaltgerade $s_\sigma = 0$ zu erreichen. Vorzugsweise sollte dabei eine zu langsame Annäherungsgeschwindigkeit an die Schaltgerade vermieden werden. Andererseits sollte bei kleinen Entfernungen $s_\sigma$ eine zu große Annäherungsgeschwindigkeit an die Schaltgerade $s_\sigma = 0$ vermieden werden, da dies zu einem unerwünschten Überschwingen des Reglers führen kann. Ist z. B. $s_\sigma$ positiv groß, $\dot{s}_\sigma$ negativ und u negativ, so sollte der negative Ausgangswert u des Reglers beispielsweise nicht verändert werden. Dies wird dadurch erreicht, daß $\Delta r_i = Z$ (Zero) gesetzt wird. In Tabelle wird dies durch Regel 7 dargestellt.

$R_i^j$:      If $s_\sigma$ is $LS_{\sigma i}^j$ and $\dot{s}_\sigma$ is $L\dot{S}_{\sigma i}^j$ and u is $LU_i^j$ Then $\Delta r_i$ is $L\Delta R_i^j$

| Regel 1: | PB | NB | NB | PB |
| Regel 2: | PB | N | NB | P |
| Regel 3: | PB | Z | NB | Z |
| Regel 4: | PB | P | NB | N |
| Regel 5: | PB | PB | NB | NB |
| Regel 6: | PB | NB | N | P |
| Regel 7: | PB | N | N | Z |
| Regel 8: | PB | Z | N | N |
| Regel 9: | PB | P | N | NB |

.

.

.

P steht hier für Positiv, N für Negativ, Z für Zero (Null) und B für Big (groß)

Vorzugsweise werden diese Adaptionsregeln durch Erfahrung oder durch heuristisches Wissen erstellt. Aus Erfahrung weiß man, daß die Annäherungsgeschwindigkeit $\dot{s}_\sigma$ bei großer Auslenkung und negativen u relativ stark sein sollte. Ist des weiteren z. B. $s_\sigma$ positiv groß, $\dot{s}_\sigma$ positiv und u negativ, so ist die Stellgröße des Reglers nicht groß genug, um $\dot{s}_\sigma < 0$ zu bewirken, d. h. der negative Ausgangswert des Fuzzy-Reglers wird weiter durch $\Delta r_i < 0$ stark verkleinert. In Tabelle 1 wird dies durch Regel 9 graphisch dargestellt.

$s_\sigma$ kennzeichnet den Abstand zur Schaltgeraden des Fuzzy-Reglers mit $s_\sigma = 0$. Q ist dabei der Punkt auf der Systemtrajektorie mit den Koordianten $(x_0, \dot{x}_0)$. $\dot{s}_\sigma$ charakterisiert die Annäherung des Systempunktes Q an die Schaltgerade $s_\sigma = 0$. Durch das erfindungsgemäße Verfahren werden die Größen Ort, als Entfernung $s_\sigma$ von der Schaltgeraden mit der Annäherungsgeschwindigkeit, als der Ableitung $\dot{s}_\sigma$ und der aufzubringenden Stellgröße u, direkt korrelliert mit der Stellenergie, verbunden. Der Grundgedanke bei der erfindungsgemäßen Adaptionsstrategie besteht darin, eine möglichst rasche Annäherung an die Schaltgerade zu erreichen. Bei Sliding Mode Fuzzy-Controllern sollte dabei eine zu langsame Annäherungsgeschwindigkeit in der Grenzschicht an die Schaltgerade $s_\sigma = 0$ vermieden werden, um Störungen rasch ausregeln zu können. Eine zu große Annäherungsgeschwindigkeit bei kleinen Auslenkungen kann jedoch ein unerwünschtes Überschwingen des Regelkreises zur Folge haben. Die L Regeln $R_i^j$, welche die bevorzugte Adaptionsstrategie für den Parameter $r_i$ an der Stützstelle $x_{fix,i}$ festlegen, weisen vorzugsweise folgende Form auf:

$R_i^j$:      If $s_\sigma$ is $LS_{\sigma i}^j$ and $\dot{s}_\sigma$ is $L\dot{S}_{\sigma i}^j$ and u is $LU_i^j$ Then $\Delta r_i$ is $L\Delta R_i^j$ j = 1,..., L.

Die Regeln für die Stützstelle, die durch "$s_\sigma$ is PB" gekennzeichnet sind ergeben sich aus Tabelle 1. Die Fuzzy-Regeln aus Tabelle 1 sind ebenfalls in Figur 4 als Matrix dargestellt. Dort ist zu erkennen, daß die Regelsätze eine Diagonalform aufweisen, was durch die gepunkteten Umrandungen dargesellt ist. Durch diese Regeln wird der Abstand $s_\sigma$ des Zustandsvektors x von der Hyperschaltfläche $s_\sigma = 0$ mit der Ableitung $\dot{s}_\sigma$, auf die auch die Stellgröße u wirkt, und der Stellgröße u in der Prämisse der Regel $R_i^j$ verknüpft. Die Komponente $r_i$ des Parametervektors R wird vorzugsweise mit $\Delta r_i$ im Konklusionsteil derselben Regel verändert. $LS_{\sigma i}^j$, $L\dot{S}_{\sigma i}^j$, $LU_i^j$ und $L\Delta R_i^j$ bezeichnen die Wertemenge der entsprechenden linguistischen Variablen. Vorzugsweise wird die Schaltvariable $S_\sigma$ entsprechend Gleichung (5) ermittelt. $S_\sigma$ charakterisiert die Lage der Stützstelle in der Reglerkennlinie. Für die Regeln der i-ten-Regelbasis, die hier den Wert des Fuzzy-Reglers an der i-ten-Stützstelle adaptieren, sei $s_\sigma$ als konstant angenommen.

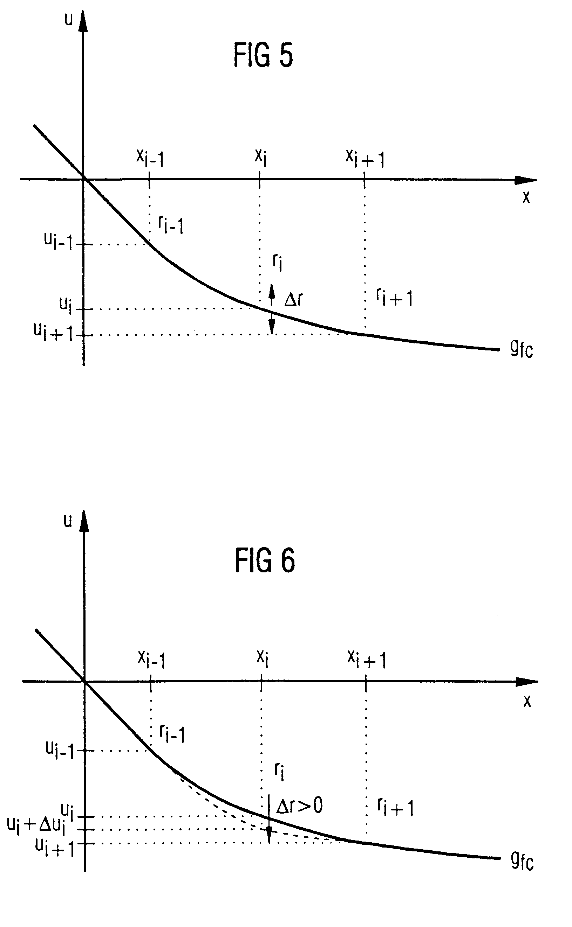

Figur 5 verdeutlicht den Zusammenhang bei der Veränderung der Lage einer Stützstelle durch eine Parameteränderung $\Delta r$. In der Reglerkennlinie $g_{fc}$ sind verschiedene Stützstellen als Schnittpunkte auf den Koordinaten der jeweiligen x- und u-Werte angegeben. Bei der Stützstelle am Punkt $x_i$ und $u_i$ ist die Veränderung $\Delta r$ in Form von zwei Pfeilen angedeutet. Vorzugsweise sollte die Veränderung der Position der Stützstelle lediglich in Richtung der Achse u durchgeführt werden. Dies liegt daran, daß lediglich zwischen u und $\Delta r$ ein linearer Zusammenhang besteht, wie schon früher in der Beschreibung dargelegt wurde. Um eine solche Veränderung durchführen zu können, muß vorzugsweise die Zieharmonikafunktion der Ausgang-Fuzzy-Sets gestaucht oder gedehnt werden. Es ist auch denkbar, eine Veränderung der Lage der Stützpunkte in x-Richtung durchzuführen. Jedoch muß dabei beachtet werden, daß hier kein proportionaler bzw. linearer Zusammenhang zwischen der Änderung in x-Richtung und der Parameteränderung gefunden werden kann, da zwischen den Eingangs-Fuzzy-Sets und der Ausgangsgröße kein linearer Zusammenhang besteht. Falls ein solcher Zusammenhang bei der Adaption des Reglers nicht von Bedeutung ist, so könnte eine Veränderung der Position der Stützstellen in x-Richtung durch eine Stauchung oder Dehnung der Zieharmonikafunktionen der Eingangs-Fuzzy-Sets erzielt werden.

Ziel der Erfindung ist eine gezielte Beeinflussung der Reglerparameter $r_i$. Diese Vorgehensweise stellt eine Grundlage des erfindungsgemäßen Adaptionsverfahrens dar. Die Parameterwerte $r_i$ selbst wirken dabei unmittelbar auf den Fuzzy-Regler $g_{fc}(.)$, hiermit wird der augenblickliche Zustandsvektor bezeichnet, und damit außerdem auf die Ableitung $\dot{s}_\sigma$. Die Regeln ermitteln dabei abhängig vom gewünschten Verhalten des geschlossenen Regelkreises an den Stützstellen die entsprechende Änderung der Parameter $r_i$ des Fuzzy-Reglers. Für die Adaption jedes Parameter $r_i$ wird dabei vorzugsweise eine eigene Regelbasis und damit Adaptionsstrategie festgelegt. Durch die Beeinflussung der Parameter $r_i$ des Fuzzy-Reglers an den Stützstellen ($\mu_i = 1$) werden Kopplungen zwischen den verschiedenen Parametern vermieden. Aus der Darstellung des Sachverhaltes in Figur 5 kann auch erkannt werden, daß eine Veränderung der Reglerparameter $r_j$, j $\neq$ i, nie den Ausgangswert des Fuzzy-Reglers an der Stützstelle $r_i$ verändert. Aus der Tabelle 1 wird die Ähnlichkeit des erfindungsgemäßen Verfahrens mit der Struktur eines Fuzzy Sliding Mode-Reglers ersichtlich. Für diese Regelbasis liegt die Struktur eines Sliding-Mode Fuzzy-Reglers vor, denn in den Parallelen zur Hauptdiagonalen stehen gleiche Ausgangswerte $\Delta r_i$, wie in Figur 4 dargestellt wurde. Hier allerdings wird der Fuzzy Sliding Mode-Regler für die Adaptionszwecke eines zweiten Fuzzy-Reglers im zugrundeliegenden Regelkreis eingesetzt. Die Hyperschaltfläche von Fuzzy Sliding Mode-Reglern reduziert sich in diesem Fall auf eine Schaltgerade $s_\alpha = 0$ in der $(\dot{s}_\sigma, u)$-Ebene.

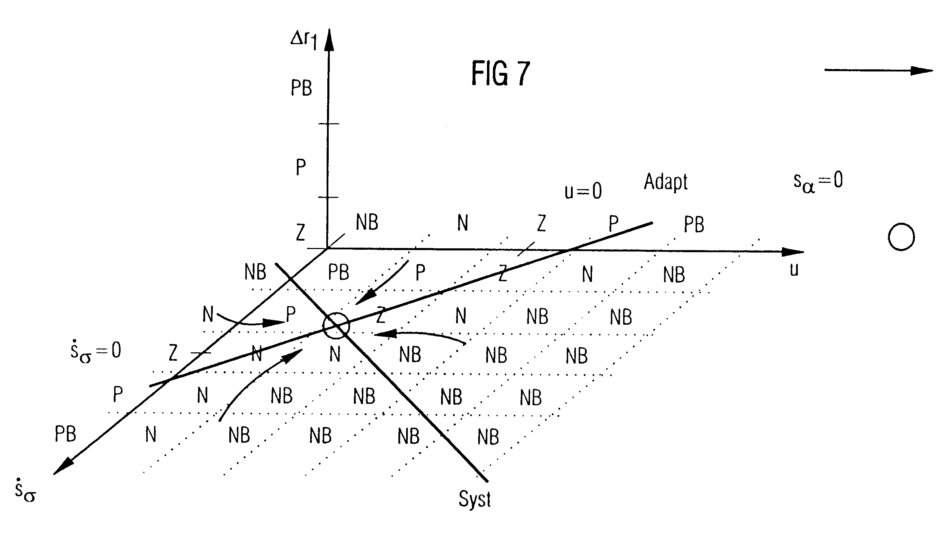

In Figur 7 wird dieser Sachverhalt anschaulich dargestellt. Die Schaltgerade ist dabei mit Adapt bezeichnet. Diese Schaltgerade kann analytisch beschrieben werden als

$$s_\alpha = s_\alpha(\dot{s}_\sigma, u) = \lambda_\alpha(\dot{s}_\sigma - \dot{s}_{\sigma,0}) + (u - u_0) = 0$$

$\lambda_\alpha > 0$ gibt die Steigung der Adaptionsgeraden $s_\alpha = 0$ an. Der Punkt $(s_{\sigma,0}, u_0)$ definiert einen Punkt auf der Adaptionsgeraden. Die Systemgerade Syst veranschaulicht dabei das Systemverhalten in der $(\dot{s}_\sigma, u)$-Ebene. In den einzelnen Rasterflächen, der Ebene $(\dot{s}_\sigma, u)$ sind die jeweiligen linguistischen Variablen eingetragen, und zwar sind das diese Werte, welche $\Delta r_i$ vorzugsweise annimmt, wenn sich der augenblickliche Zustand $(\dot{s}_\sigma, u)$ in diesem Rasterfeld befindet. Durch die angegebenen Parameteränderungen $\Delta r$ wird eine Annäherung des dargestellten Systemzustandes in Richtung des Schnittpunktes der beiden Geraden Adapt und Syst erreicht. Die linguistischen Variablen sind dabei in gängiger Weise bezeichnet. NB bedeutet Negativ Big, N bedeutet negativ, P bedeutet positiv, PB bedeutet Positiv Big, Z bedeutet Zero. Vorzgusweise wird für die Adaption des Fuzzy Sliding Mode-Reglers dabei nach folgenden Adaptionsgesetzen vorgegangen.

Grundlage für die Regelung und die Adaption ist vorzugsweise die Systemgleichung

$$x^{(n)} = f(\vec{x}) + b(\vec{x}) \cdot u \tag{1}$$

wobei

$\vec{x} = (x, \dot{x}, \ldots, x^{(n-1)})^T$     -Zustandsvektor
$b(\vec{x}) > 0, f(\vec{x})$     -Nichtlineare Funktionen von $\vec{x}$
$u$     -Stellgröße
$x^{(n)}$     -n-te Ableitung von $x$ nach der Zeit bedeuten.
Das Adaptionsgesetz für den Regler, der die Stellgröße $u$ produziert, lautet vorzugsweise

$$\dot{r}_i = -\frac{1}{\lambda_\alpha \hat{b}(\vec{x}_{fix,i}) + 1} \cdot c_{ii} \cdot \frac{\partial g_{fc}(\vec{x}_{fix,i}, \vec{r})}{\partial r_i} \cdot \text{sgn}(s_\alpha). \tag{2}$$

Es gibt an, wie die Parameteradaptionsgeschwindigkeit $\dot{r}_i$ für den Parameter $r_i$ zu wählen ist, damit die Adaption konvergiert.

$\lambda_\alpha$ bestimmt die Steilheit der Adaptionsgeraden $s_\alpha = 0$.
$\hat{b}(x_{fix,i})$ ist eine Schätzung für die Funktion $b(x_{fix,i})$ an der Stelle $x_{fix,i}$
$c_{ii} > 0$ ist das $ii$ - Element aus einer $(N \times N)$ - Diagonalmatrix, in welcher nur die Diagonale besetzt ist

$$\frac{\partial g_{fc}(\vec{x}_{fix,i}, \vec{r})}{\partial r_i}$$

ist die Änderung des Regelgesetzes $du = dg_{fc}(\vec{x}_{fix,i}, \vec{r})$ bzgl. der Parameteränderung $dr_i$.
$\text{sgn}(s_\alpha)$ bestimmt das Vorzeichen der zu wählenden Parameteränderungsgeschwindigkeit

Die Gleichgewichtsbedingung

$$\lambda_\alpha(\Delta f(\vec{x}) + \Delta b(\vec{x}) g_{fc}(\vec{x}, \vec{r})) + (\lambda_\alpha \hat{b}(\vec{x}_{fix,i}) + 1) \cdot (g_{fc}(\vec{x}_{fix,i}, \vec{r}) - g_{fc}(\vec{x}_{fix,i}, \vec{r}_{opt})) = 0 \tag{3}$$

beschreibt das Systemverhalten auf der Adaptionsgeraden $s_\alpha = 0$. Sie setzt Systemungenauigkeiten $\Delta f(\vec{x}) + \Delta b(\vec{x}) g_{fc}(\vec{x}, \vec{r})$ mit Abweichungen der i-ten Parameterkomponente $r_i$ von ihrem Optimalwert in Verbindung. Je nach Höhe der Systemungenauigkeiten ergibt sich für den adaptierten Regler $u = g_{fc}(\vec{x}_{fix,i}, \vec{r})$ ein an der Stelle $x_{fix,i}$ von dem optimalen Regler $u = g_{fc}(\vec{x}_{fix,i}, \vec{r}_{opt})$ abweichender Wert, der im Laufe der Adaption für $\Delta f(\vec{x}) + \Delta b(\vec{x}) g_{fc}(\vec{x}, \vec{r}) \to 0$ auf den optimalen Wert konvergiert.

**Patentansprüche**

1.   Verfahren zur Adaption eines Fuzzy Sliding Mode Reglers mit folgenden Merkmalen:

EP 0 791 870 A1

a) die Form der Reglerkennlinie oder des Reglerkennfeldes eines Fuzzy Sliding Mode Reglers in einem geschlossenen Regelkreis wird verändert, indem für diesen optimale Regelparameter durch einen im Fuzzy Sliding Mode arbeitenden Adaptierer bestimmt werden,

b) zur Bestimmung der optimalen Regelparameter werden durch den Adaptierer linguistische Regeln ausgewertet, welche auf linguistische Variable angewendet werden, die mindestens Regelgrößen oder Derivate von Regelgrößen und/oder Stellgrößen und Reglerparameter oder Derivate von Reglerparametern des Fuzzy Sliding Mode Reglers kennzeichnen,

c) die linguistischen Regeln für den im Fuzzy Sliding Mode arbeitenden Adaptierer sind so beschaffen, daß sie solche optimalen Reglerparameter erzeugen, welche eine Veränderung im Sinne der Verbesserung eines vorgegebenen Gütemaßes für den ersten geschlossenen Regelkreis bewirken.

2. Verfahren nach Anspruch 1,
bei dem als Regelgrößen oder Derivate von Regelgrößen mindestens die Entfernung des augenblicklichen Zustandspunktes der Regelstrecke von der Schaltgeraden / Schaltfläche des Fuzzy Sliding Mode Reglers und/oder die Annäherungsgeschwindigkeit des augenblicklichen Zustandspunktes an die Schaltgerade / Schaltfläche des Fuzzy Sliding Mode Reglers und/oder die Stellgröße verwendet werden.

3. Verfahren nach einem der vorangehenden Ansprüche, bei dem als Gütemaß eine möglichst schnelle Annäherung des augenblicklichen Zustandspunktes an die Schaltgerade / Schaltfläche vorgegeben wird.

4. Verfahren nach einem der vorangehenden Ansprüche, bei dem als Gütemaß eine auf die Annäherungsgeschwindigkeit des augenblicklichen Zustandspunktes an die Schaltgerade / Schaltfläche bezogene Stellgrößenänderung vorgegeben wird.

5. Verfahren nach Anspruch 4, bei dem solche Regelparameter bevorzugt werden, welche bei kleiner Stellgrößenänderung eine hohe Annäherungsgeschwindigkeit bewirken.

6. Verfahren nach einem der vorangehenden Ansprüche, bei dem solche Regelparameter bevorzugt werden, welche eine proportionale Abhängigkeit der Annäherungsgeschwindigkeit des augenblicklichen Zustandspunktes an die Schaltgerade / Schaltfläche von der Entfernung des augenblicklichen Zustandspunktes der Regelstrecke von der Schaltgeraden / Schaltfläche des Fuzzy Sliding Mode Reglers bewirken.

7. Verfahren nach nach einem der vorangehenden Ansprüche, bei dem zur Veränderung der Form der Reglerkennlinie des Fuzzy Sliding Mode Reglers die Position von Stützstellen in der Kennlinie variiert wird, indem dazu eine Veränderung der Fuzzy-Sets durchgeführt wird.

8. Verfahren nach Anspruch 7, bei dem die Positionsvariation durch Veränderung der Ausgangs Fuzzy-Sets erreicht wird.

9. Anordnung zur Adaption eines Fuzzy Sliding Mode Reglers,

a) bei der ein geschlossener Regelkreis mit einem Fuzzy Sliding Mode Regler vorgesehen ist,
b) und bei der ein Adaptierer mit der Struktur eines Fuzzy Sliding Mode Reglers zur Adaption des Fuzzy Sliding Mode Reglers vorgesehen ist, welcher mit dem geschlossenen Regelkreis signalleitend verbunden ist.

8

## FIG 1

## FIG 2

# FIG 3

# FIG 4

| $\dot{S}_\sigma$ \\ $u$ | NB | N | Z | P | PB |
|---|---|---|---|---|---|
| NB | PB | P | Z | N | NB |
| N | P | Z | N | NB | NB |
| Z | Z | N | NB | NB | NB |
| P | N | NB | NB | NB | NB |
| PB | NB | NB | NB | NB | NB |

FIG 5

FIG 6

FIG 7

EP 0 791 870 A1

Europäisches Patentamt

**EUROPÄISCHER RECHERCHENBERICHT**

Nummer der Anmeldung

EP 97 10 2599

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | PROCEEDINGS OF THE CONFERENCE ON FUZZY SYSTEMS, ORLANDO, JUNE 26 - 29, 1994, Bd. 2, 26.Juni 1994, INSTITUTE OF ELECTRICAL AND ELECTRONICS ENGINEERS, Seiten 756-765, XP000518328 PALM R ET AL: "FUZZY INPUTS" * das ganze Dokument * --- | 1,9 | G05B13/02 |
| D,A | WO 93 11473 A (SIEMENS AG) 10.Juni 1993 * das ganze Dokument * --- | 1 | |
| A | PROCEEDINGS OF THE 1995 IEEE INTERNATIONAL SYMPOSIUM ON INTELLIGENT CONTROL, 27.August 1995, USA, Seiten 371-376, XP000671297 D.S.REAY ET AL: "ON THE APPROPRIATE USE OF FUZZY SYSTEMS: FUZZY SLIDING MODE POSITION CONTROL OF A SWITCHED RELUCTANCE MOTOR" * das ganze Dokument * --- | 1,9 | |
| A | PROCEEDINGS OF THE 1995 IEEE INTERNATIONAL CONFERENCE ON FUZZY SYSTEMS, Bd. 4, 20.März 1995, JAPAN, Seiten 1979-1986, XP000671296 A.TREBI ET AL: "A DIRECT ADAPTIVE FUZZY SMC" * das ganze Dokument * --- | 1,9 | **RECHERCHIERTE SACHGEBIETE (Int.Cl.6)**<br><br>G05B |
| A | INTELLIGENT ENGINEERING SYSTEMS THROUGH ARTIFICIAL NEURAL NETWORKS, Bd. 5, 12.November 1995, USA, Seiten 557-562, XP000671299 H.ALLAMEHZADEH ET AL: "DESIGN AND STABILITY ANALYSIS OF A FUZZY SLIDING MODE CONTROLLER" * das ganze Dokument * --- | 1,9 | |

-/--

Der vorliegende Recherchenbericht wurde für alle Patentansprüche erstellt

| Recherchenort | Abschlußdatum der Recherche | Prüfer |
|---|---|---|
| DEN HAAG | 14.Mai 1997 | Kelperis, K |

EPO FORM 1503 03.82 (P04C03)

| Europäisches Patentamt | **EUROPÄISCHER RECHERCHENBERICHT** | Nummer der Anmeldung EP 97 10 2599 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| D,A | AUTOMATICA,<br>Bd. 30, Nr. 9, September 1994, UK,<br>Seiten 1429-1437, XP000671486<br>R.PALM: "ROBUST CONTROL BY FUZZY SLIDING MODE"<br>* das ganze Dokument *<br>----- | 1,9 | |
| | | | **RECHERCHIERTE SACHGEBIETE (Int.Cl.6)** |

Der vorliegende Recherchenbericht wurde für alle Patentansprüche erstellt

| Recherchenort | Abschlußdatum der Recherche | Prüfer |
|---|---|---|
| DEN HAAG | 14.Mai 1997 | Kelperis, K |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)